# EUROPEAN PATENT APPLICATION

(11) **EP 4 400 388 A1**
(43) Date of publication of application: **17.07.2024**
(21) Application number: 23151343.3
(22) Date of filing: 12.01.2023
(51) Int. Cl.: B62B 5/02

(54) **TROLLEY**

(71) Applicant: Design Team Spolka Z Ograniczona Odpowiedzialnoscia, 00-233 Warszawa (PL)
(72) Inventor: Mankowski, Jaroslaw, 05-800 Pruszków (PL); Hiller, Ewa, 00-233 Warszawa (PL)
(74) Representative: Basck Limited

(57) **Abstract**

In general terms the present invention proposes a trolley 100 comprising: a wheel 109; a switch 117 protruding outwardly of the wheel 109; and a lifting arm 123, wherein activation of the switch 117 is arranged to move the lifting arm 123 from a stowed position to a lifting position in which it raises the wheel 109 off the ground.

## Description

### TECHNICAL FIELD

This invention relates to a trolley, for example such as a shopping trolley.

### BACKGROUND

Trolleys are commonly used for carrying shopping and other items. Known trolleys comprise a relatively upright container for storing shopping and other items having wheels on a lower end and on an upper a handle for pushing or pulling the trolley. Such trolleys can be difficult to manoeuvre over obstacles such as kerbs or stairs, particularly when the trolley is heavy due to being loaded with shopping or other items.

Hence, there remains a need for improved trolleys that can overcome obstacles. It is an object of the invention to address at least one of the above problems, or another problem associated with the prior art.

### SUMMARY OF THE INVENTION

A first aspect of the invention provides a trolley comprising: a wheel; a switch protruding outwardly of the wheel; and a lifting arm, wherein activation of the switch is arranged to move the lifting arm from a stowed position to a lifting position in which it raises the wheel off the ground.

In this way, as the wheel approaches as obstacle such as a kerb or stair, the obstacle may contact the protruding switch prior to contacting the wheel, thereby activating the switch. The resulting movement of the lifting arm from the stowed position to the lifting position raises the wheel off the ground, which may advantageously allow the obstacle to be more easily overcome by the trolley.

Suitably, the trolley may comprise a drive motor arranged to drive the wheel.

In some embodiments, the switch may lie generally in the plane of the circumference of the wheel. Suitably, the switch may protrude outwardly of the circumference of the wheel. For example, the switch may protrude generally radially outwardly of the circumference of the wheel.

In some embodiments, the trolley may have a front side comprising a container or storage portion, for example for storing shopping and/or other items, and a rear side comprising a handle for pushing or pulling the trolley. In such embodiments, the switch may protrude outwardly of the wheel towards the rear side of the trolley. Alternatively, the switch may protrude outwardly of the wheel towards the front side of the trolley.

Suitably, the switch may comprise a limit switch. In this way, pressure applied to the switch, for example by contact of the switch with an obstacle, may advantageously activate the switch.

In some embodiments, the switch may comprise a bar protruding outwardly of the wheel. For example, the switch may comprise a bar protruding generally radially outwardly of the wheel.

In some embodiments, activation of the switch may be triggered by movement of the bar from a first position to a second position. Thus, in embodiments in which the switch comprises a limit switch, movement of the bar from the first position to the second position may apply pressure to the switch thereby activating the switch.

Suitably, the bar may be mounted pivotally on an axis of the switch.

In some embodiments, the trolley may comprise an electro-mechanical clutch. Suitably, actuation of the switch may activate the electro-mechanical clutch to move the lifting arm from the stowed position to the lifting position. In embodiments comprising a drive motor, the electro-mechanical clutch may suitably be driven by the drive motor.

In some embodiments, the trolley may comprise a lifting motor for moving the lifting arm from the stowed position to the lifting position. Suitably, actuation of the switch may activate the lifting motor to move the lifting arm from the stowed position to the lifting position.

In some embodiments, the lifting arm may be rotatable about a common axis with the wheel.

In some embodiments, the lifting arm may be rotatable through 90° or less from the stowed position to the lifting position.

In some embodiments, the lifting arm may comprise a foot portion for engagement with the ground.

In some embodiments, the trolley may comprise a spring for returning the lifting arm from the lifting position to the stowed position upon deactivation of the switch.

In some embodiments, the trolley may comprise a return motor for returning the lifting arm from the lifting position to the stowed position upon deactivation of the switch. Alternatively, in embodiments comprising a lifting motor, the lifting motor may conveniently be arranged to return the lifting arm from the lifting position to the stowed position upon deactivation of the switch.

In some embodiments, the trolley may comprise first and second wheels. In such embodiments the trolley may comprises first and/or second switches protruding outwardly of the first and second wheels. The trolley may further comprise first and second lifting arms. The first and second lifting arms may conveniently be arranged generally adjacent to each of the first and second wheels. Suitably, activation of the first and/or second switch may be arranged to move the first and/or second lifting arms from a stowed position to a lifting position in which they raise the first and/or second wheels off the ground.

Throughout the description and claims of this specification, the words "comprise" and "contain" and variations of the words, for example "comprising" and "comprises", mean "including but not limited to", and do not exclude other components, integers or steps. Moreover, the singular encompasses the plural unless the context otherwise requires: in particular, where the indefinite article is used, the specification is to be understood as contemplating plurality as well as singularity, unless the context requires otherwise.

Preferred features of each aspect of the invention may be as described in connection with any of the other aspects. Within the scope of this application it is expressly intended that the various aspects, embodiments, examples and alternatives set out in the preceding paragraphs, in the claims and/or in the following description and drawings, and in particular the individual features thereof, may be taken independently or in any combination. That is, all embodiments and/or features of any embodiment can be combined in any way and/or combination, unless such features are incompatible.

### BRIEF DESCRIPTION OF THE DRAWINGS

One or more embodiments of the invention will now be described, by way of example only, with reference to the accompanying drawings, in which:
Figure 1 is a perspective view of a trolley in accordance with a first embodiment of the invention; and
Figure 2 is a perspective view of a trolley in accordance with a second embodiment of the invention, in which one of the wheels has been removed to make it easier to view the lifting mechanism.

### DETAILED DESCRIPTION

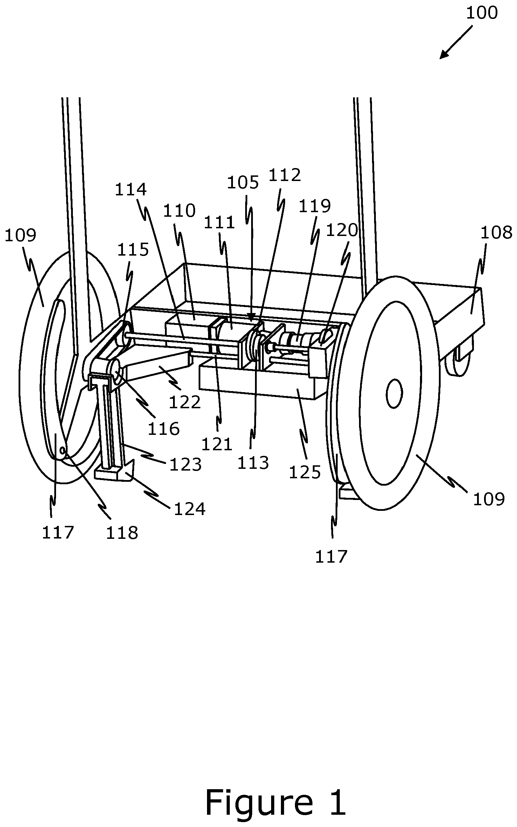

Referring to Figure 1, a trolley 100 in accordance with a first embodiment of the invention comprises a frame 108 attached to two wheels 109 on opposite sides of the frame 108. The frame 108 is connected to a basket (not shown in Figure 1) for storing shopping and other items, and comprises a handle (also not shown) to allow a user to push or pull the trolley 100.

A drive system 105 is attached to the frame 108 and includes a DC motor 110 and a first transmission 111, which at their output provide a driving torque necessary to move the trolley 100 with a full load at a speed of around 5 km/h. The drive system 105 also includes a second transmission 112. The first transmission 111 is connected to the DC motor 110, and the second transmission 112 is connected to first transmission 111. The drive torque from the first transmission 111 is transmitted to the wheels 109 via the second transmission 12112, a differential113, a first shaft 114, a third transmission 115, and a first clutch 116. The DC motor 110 is connected to a battery 125, which is attached to the underside of the frame 108.

The trolley 100 also comprises a pair of engagement bars 117, one adjacent to each of the two wheels 109. Each engagement bar 117 is mounted pivotally on the axis of a switch 118. In their normal (i.e. rest) position, each of the engagement bars 117 extends beyond the outline of the wheels 109, thereby protruding outwardly from the rear of the wheels 109 by around 2-3 mm.

In this example, the switches 118 are limit switches each comprising two contacts one of which is on a spring. The engagement bars 117 act as triggers for activating the switches 118. When one or both of the engagement bars 117 are pushed towards the wheels 109, one or both of the switches 118 are pressed by the engagement bar(s) 117. Thus, when the trolley 100 approaches an obstacle (for example, such as a kerb or step) one or both of the engagement bars 117 are first pressed by the obstacle and only afterwards do the wheel(s) 109 make contact with the obstacle. The movement of the engagement bar 117 presses on the contact of the switch 118, which is located on a spring, and the contacts make contact and the current flow is switched on.

The flow of current through the switches activates and engages a second electro-mechanical clutch 119. The engagement of the second clutch 119 causes torque from the drive system 105 to be transmitted not only to the wheels 109, but also to a fourth transmission 120 from which torque is transmitted to a second shaft 121. Each end of the second shaft 121 is connected to a first arm portion 122, which is connected to a lifting arm 123. The lifting arms 123 are arranged adjacent to each of the wheels 109. Each of the lifting arms 123 has a foot portion 124 for engaging with the ground. The lifting arms 123 are moveable from a first stowed position to a second lifting position in which they engage with the ground thereby lifting the trolley 100 and raising the wheels 109 off the ground.

The rotation of the second shaft 121 causes the first arm portions 122 to move downwards, thereby causing the lifting arms 123 to be moved from the first stowed position to the second lifting position and causing the feet portions 124 to move downwards and engage the ground. As the feet portions 124 are at a very short distance from the ground, a minimum rotation of the second shaft 121 causes them to lock and further rotation of the second shaft 121 causes the trolley 100 to lift off the ground so that the trolley 100 can be easily manoeuvred over the obstacle.

Overcoming the obstacle relieves the pressure on the engagement bars 117, causing them to move back to their normal (i.e. rest) position. This causes the second clutch 119 to disengage and the lifting arms 123 to be returned to the first stowed position, thereby lowering the wheels 109 back down into contact with the ground or an upper surface of the obstacle.

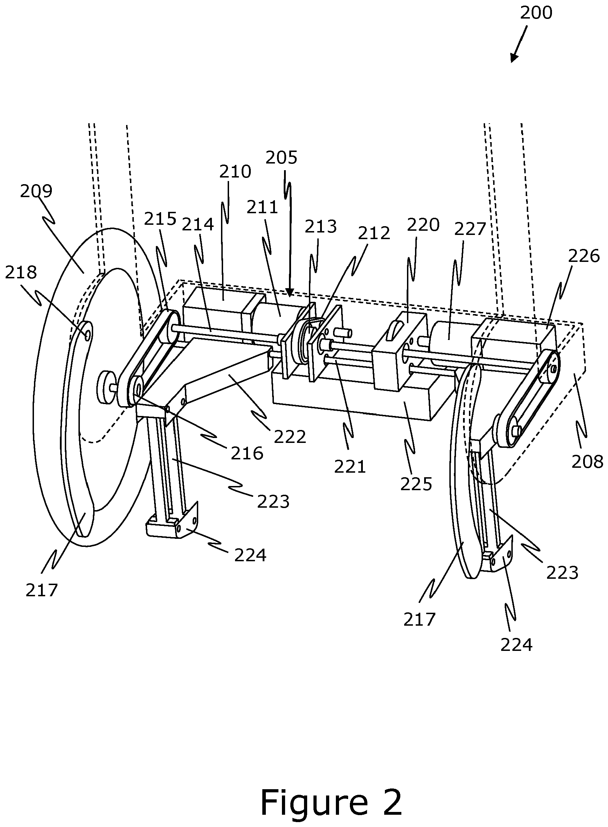

Referring to Figure 2, a trolley 200 in accordance with a second embodiment of the invention comprises a frame 208 attached to two wheels 209 on opposite sides of the frame 208. The frame 208 is connected to a basket (not shown in Figure 2) for storing shopping and other items, and comprises a handle (also not shown) to allow a user to push or pull the trolley 200.

A drive system 205 is attached to the frame 208 and includes a first DC motor 210 and a first transmission 211, which at their output provide a driving torque necessary to move the trolley 200 with a full load at a speed of around 5 km/h. The drive system 205 also includes a second transmission 212. The first transmission 211 is connected to the first DC motor 210, and the second transmission 212 connected to first transmission 211. The drive torque from the first transmission 211 is transmitted to the wheels 209 via the second transmission 212, a differential 213, a first shaft 214, a third transmission 215, and a first clutch 216. The first DC motor 210 is connected to a battery 225, which is attached to the underside of the frame 208.

The trolley 200 also comprises a pair of engagement bars 217, one adjacent to each of the two wheels 209. Each engagement bar 217 is mounted pivotally on the axis of a switch 218. In their normal (i.e. rest) position, each of the engagement bars 217 extends beyond the outline of the wheels 209, thereby protruding outwardly from the rear of the wheels 209 by around 2-3 mm.

In this example, the switches 118 are limit switches each comprising two contacts one of which is on a spring. The engagement bars 217 act as triggers for activating the switches 218. When one or both of the engagement bars 217 are pushed towards the wheels 200, one or both of the switches 218 are pressed by the engagement bar(s) 217. Thus, when the trolley 200 approaches an obstacle (for example, such as a kerb or step) one or both of the engagement bars 217 are first pressed by the obstacle and only afterwards do the wheel(s) 209 make contact with the obstacle. The movement of the engagement bar 217 presses on the contact of the switch 218, which is located on a spring, and the contacts make contact and the current flow is switched on.

The flow of current through the switches activates a second DC motor 226, which is connected to a fourth transmission 227. The second DC motor 226 is also connected to the battery 225. The fourth transmission 227 is connected to a fifth transmission 220, which in turn is connected to a second shaft 221. Thus, activation of the second DC motor 226 results in rotation of the second shaft 221. Each end of the second shaft 221 is connected to a first arm portion 222, which is connected to a lifting arm 223. The lifting arms 223 are arranged adjacent to each of the wheels 209. Each of the lifting arms 223 has a foot portion 224 for engaging with the ground. The lifting arms 223 are moveable from a first stowed position to a second lifting position in which they engage with the ground thereby lifting the trolley 200 and raising the wheels 209 off the ground.

The rotation of the second shaft 221 causes the first arm portions 222 to move downwards, thereby causing the lifting arms 223 to be moved from the first stowed position to the second lifting position and causing the feet portions 224 to move downwards and engage the ground. As the feet portions 224 are at a very short distance from the ground, a minimum rotation of the second shaft 221 causes them to lock and further rotation of the second shaft 221 causes the trolley 200 to lift off the ground so that the trolley 200 can be easily manoeuvred over the obstacle.

Overcoming the obstacle relieves the pressure on the engagement bars 217, causing them to move back to their normal (i.e. rest) position. This causes the second clutch 219 to disengage and the lifting arms 223 to be returned to the first stowed position, thereby lowering the wheels 209 back down into contact with the ground or an upper surface of the obstacle.

## Claims

1. Trolley comprising: a wheel; a switch protruding outwardly of the wheel; and a lifting arm, wherein activation of the switch is arranged to move the lifting arm from a stowed position to a lifting position in which it raises the wheel off the ground.

2. The trolley of claim 1, wherein the switch comprises a bar protruding outwardly of the wheel.

3. The trolley of claim 2, wherein activation of the switch is triggered by movement of the bar from a first position to a second position.

4. The trolley of claim 2 or claim 3, wherein the bar is mounted pivotally on an axis of the switch.

5. The trolley of any preceding claim, comprising an electro-mechanical clutch, wherein actuation of the switch activates the electro-mechanical clutch to move the lifting arm from the stowed position to the lifting position.

6. The trolley of any one of claims 1 to 4, comprising a motor, wherein actuation of the switch activates the motor to move the lifting arm from the stowed position to the lifting position.

7. The trolley of any preceding claim, wherein the lifting arm is rotatable about a common axis with the wheel.

8. The trolley of any preceding claim, wherein the lifting arm is rotatable through 90° or less from the stowed position to the lifting position.

9. The trolley of any preceding claim, wherein the lifting arm comprises a foot portion for engagement with the ground.

10. The trolley of any preceding claim, comprising a spring for returning the lifting arm from the lifting position to the stowed position upon deactivation of the switch.

11. The trolley of any one of claims 1 to 9, comprising a motor for returning the lifting arm from the lifting position to the stowed position upon deactivation of the switch.

12. The trolley of any preceding claim, comprising: first and second wheels; first and second switches protruding outwardly of the first and second wheels; and first and second lifting arms adjacent to each of the first and second wheels; wherein activation of the first and/or second switch is arranged to move the lifting arms from a stowed position to a lifting position in which they raise the first and second wheels off the ground.
